# EUROPÄISCHE PATENTSCHRIFT

(11) **EP 0 730 885 B1**
(45) Veröffentlichungstag und Bekanntmachung des Hinweises auf die Patenterteilung: **05.01.2000**
(21) Anmeldenummer: 96890031.6
(22) Anmeldetag: 01.03.1996
(51) Int. Cl.: A62D 3/00, B01D 61/46, B01J 19/08, B01J 19/12

(54) **Verfahren zur Entsorgung von organischen Verbindungen**
Process for the treatment of organic substances
Procédé pour le traitement des substances organiques

(30) Priorität: 08.03.1995 AT 40295
(43) Veröffentlichungstag der Anmeldung: 11.09.1996
(73) Patentinhaber: Howorka, Franz, A-1021 Wien (AT)
(72) Erfinder: Buzetzki, Eduard, A-7041 Wolkaprodersdorf (AT)
(74) Vertreter: Kliment, Peter, Dipl.-Ing.

(56) Entgegenhaltungen:
- WO-A-94/19284
- FR-A- 2 243 904
- US-A- 4 917 785
- DATABASE WPI Section Ch, Week 9425 Derwent Publications Ltd., London, GB; Class A11, AN 94-208016 XP002006425 & SU-A-1 810 300 (KARPOV PHYS CHEM RES INST) , 23.April 1993

## Beschreibung

Gegenstand der vorliegenden Erfindung ist ein Verfahren zur Entsorgung von organischen Verbindungen, die zusätzlich zu den Elementen Kohlenstoff, Wasserstoff und Sauerstoff noch Halogen, Phosphor, Schwefel und/oder Metallelemente in atomarer Bindung enthalten, sowie eine Vorrichtung zur Durchführung dieses Verfahrens.

Substanzen, die Halogene, Phosphor, Schwefel, aber auch Metallatome, wie Quecksilber, Arsen und dergl., enthalten, kommen in den verschiedensten Anwendungsgebieten zum Einsatz. So können sie als Kühlmittel, Treibmittel, Schädlingsbekämpfungsmittel, Medikamente, Transformatorenöle und dergl., dienen. Ein besonders kritisches Gebiet in diesem Zusammenhang sind die chemischen Kampfstoffe. In allen derartigen Fällen existiert u.a. das Problem der Entsorgung dieser oft extrem gefährlichen toxischen Verbindungen. Dabei müssen Produktionsreste, Lagerbestände, häufig auch solche, die nach der Herstellung durch gesetzliche Auflagen verboten wurden, Restmengen bei den Konsumenten und dergl. vernichtet werden.

Ein häufig dabei begangener Weg ist die Entsorgung durch Verbrennung. Organische Verbindungen, die nur Kohlenstoff, Wasserstoff und Sauerstoff enthalten, verbrennen bei ausreichender Sauerstoffzufuhr klaglos zu Kohlendioxid und Wasser. Insbesondere bei Vorliegen von Halogenverbindungen erwies sich jedoch die bei der Verbrennung auftretende Bildung der gefährlichen Dioxine als Hinderungsgrund für diese Art der Unschädlichmachung.

Daher besteht nach wie vor das Bedürfnis, eine risikoarme Methode zur Vernichtung, Unschädlichmachung bzw. Entsorgung derartiger Substanzen zur Verfügung zu haben.

Der vorliegenden Erfindung liegt das Wissen zugrunde, daß elektrisch geladene Ionen oder Molekülteile durch Elektrodialyse voneinander getrennt werden können. In organischen Verbindungen mit atomarer, d.h. unpolarer Bindung der störenden Elemente ist eine solche Trennung nur dann möglich, wenn diese Bindung polarisiert und in einen Zustand gebracht wird, wo sie durch elektrische Energie auftrennbar ist.

Daher wird erfindungsgemäß der Vorschlag gemacht, die zu entsorgenden organischen Verbindungen einer Ionisation auszusetzen, worauf die entstehenden, Ladungen tragenden Ionisationsprodukte durch Elektrodialyse aufgetrennt und die ionischen Endprodukte sowie die verbleibenden organischen Substanzen einer an sich bekannten Verwendung oder Entlassung in Deponie oder Verbrennung zugeführt werden.

Die Ionisation kann durch den Einfluß von ionisierender Strahlung erfolgen.

Dabei werden die atomaren Bindungen polarisiert, die zu entsorgenden Substanzen werden zu ionischen Produkten aufgebrochen und es wird möglich, durch Einwirkung von elektrischer Energie eine Trennung der unterschiedlich geladenen Teilchen durchzuführen. Sobald die ursprünglich atomar gebundenen Elemente in ionischer Form vorliegen, sind sie leichter handzuhaben und können problemlos entsorgt oder einer anderen Verwendung zugeführt werden. Auf diese Weise erfolgt eine Unschädlichmachung der gefährlichen Verbindungen, ohne daß die bisherigen Risken bei thermischer Vernichtung eingegangen werden müssen.

Bevorzugt werden auf diese Weise Schädlingsbekämpfungsmittel, wie Pestizide, Herbizide, Fungizide, aber auch Halogenkohlenwasserstoffe, chlorierte Transformatorenöle, Medikamente oder chemische Kampfstoffe entsorgt.

Als besonders günstig hat sich das Verfahren für organische Halogenverbindungen, insbesondere solche, bei denen das Halogen an einen aromatischen Ring, vorzugsweise einen Phenylring gebunden ist, erwiesen.

Beispielsweise sind hier durch Chlor, Brom und/oder Jod substituierte Benzolderivate, die vorzugsweise noch durch eine oder mehrere Hydroxyl-, Cyan-, Alkyl- bzw. gegebenenfalls verestere Carboxyl- oder Carboxyalkylengruppen substituiert sind, zu nennen.

Praktische Beispiele sind Dibrom- bzw. Dijodhydroxybenzonitril und Chlortolyloxypropionsäure. Eine Kombination dieser Substanzen ist in der Landwirtschaft als Herbizid mit dem Namen ANITEN ^{R} in Verwendung.

Aber auch halogenierte Polyphenyle, vorzugsweise polyhalogeniertes Biphenyl (PCB), das als Transformatorenöl im Einsatz ist, kann mit dem erfindungsgemäßen Verfahren entsorgt werden.

Ein weiteres Entsorgungsproblem stellen die aliphatischen Halogenkohlenwasserstoffe (FCKW), die als Kühlmittel und Treibmittel in Gebrauch sind, dar. Auch deren Entsorgung ist Aufgabe der vorliegenden Erfindung.

Die Ionisation der zu entsorgenden Verbindungen kann durch Röntgenstrahlen, gegebenenfalls in Kombination mit Beta-und/oder Gammastrahlen, vorgenommen werden.

In einfachster Form wird hiezu ein übliches Röntgengerät verwendet, dem die zur Abschirmung der unerwünschten Beta- und Gammastrahlung eingesetzten Aluminiumplatten entnommen wurden.

Die zu entsorgende Substanz liegt vorzugsweise in flüssigem Zustand, insbesondere in Form einer Lösung, vorzugsweise in wässeriger Lösung, vor.

Die Ionisation und Dialyseeinrichtung werden räumlich kombiniert, da die Lebensdauer der entstehenden ionischen Produkte, vor allem bei Ionisation durch Strahlung, oft relativ kurz ist.

Durch die Ionisation soll eine Mindestleitfähigkeit der Lösung von 500 µS (Mikrosiemens) hervorgerufen werden, um die angestrebte Wirkung zu erzielen.

Gegenstand der vorliegenden Erfindung ist auch eine Vorrichtung zur Durchführung des genannten Verfahrens.

Die Vorrichtung wird anhand der beiliegenden Zeichnung erläutert, in welcher
Figur 1 die bevorzugte Ionisations-Dialyseeinrichtung zur Durchführung des Verfahrens darstellt;
Figur 2 zeigt die allgemeine Anordnung einer solchen Einrichtung innerhalb der gesamten zu diesem Zweck dienenden Anlage und
Figur 3 stellt eine verfeinerte Anlage mit intensiviertem Mehrkammersystem der Elektrodialyse dar.

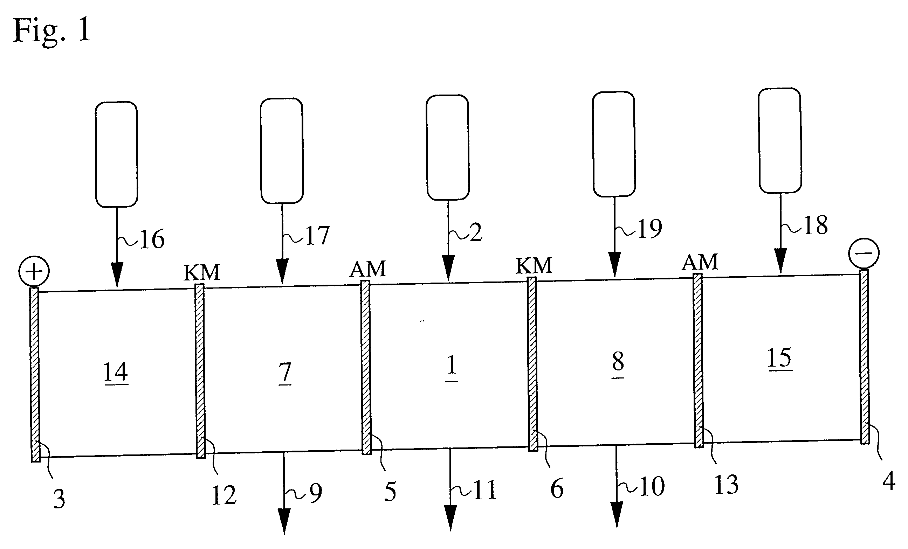

In Figur 1 ist eine bevorzugte Mehrkammeranlage dargestellt, die folgende Bestandteile aufweist:

Eine zentrale Kammer 1, in die durch eine Materialleitung 2 die Rohlösung eingeführt wird. In dieser Kammer 1 findet die Ionisation statt. Bevorzugt erfolgt die Ionisation durch die Einwirkung von ionisierender Strahlung. Über eine Anode 3 und eine Kathode 4 wird Gleichstrom angelegt und durch die Einwirkung desselben erfolgt die Auftrennung der ionisierten Bestandteile. An die zentrale Kammer 1 schließen jeweils eine durch eine Membran 5 bzw. 6 von der Kammer 1 abgetrennte Anolytkammer 7 und eine Katholytkammer 8 an. Aus diesen Kammern 7 und 8 wird der anorganische Austrag als Konzentrat über Abzugsleitungen 9 bzw. 10 abgezogen.

Organisches Material, das nach der Ionisierung in der Kammer 1 verbleibt und nicht durch die Membranen 5, 6 abdiffundieren kann, wird durch die Austragsleitung 11 als Diluat aus dieser Kammer abgeleitet.

An die Anolytkammer 7 und die Katholytkammer 8 schließen jeweils eine durch eine Membran 12 bzw. 13 abgetrennte Anodenkammer 14 und eine Kathodenkammer 15 an, in welche durch Zufuhrleitungen 16 bzw. 17 Laugen- oder Salzlösung zur Errichtung eines Ionenvorrats zugeführt wird.

Auch in die Anolytkammer 7 und in die Katholytkammer 8 werden über Zufuhrleitungen 18 bzw. 19 Laugen- oder Salzlösungen, somit Ionen, zugeführt; bevorzugt erfolgt über beide Leitungen 18 und 19 die Zufuhr von etwa 1 gew.-%-iger NaOH.

Die Membranen 5 und 13 stellen Anodenmembranen AM und die Membranen 6 und 12 stellen Kathodenmembranen KM dar.

Der Einsatz bipolarer Membranen liegt im Können des durchschnittlichen Fachmanns auf dem Gebiet der Elektrodialyse.

Bei dem bevorzugten praktischen Beispiel der Unschädlichmachung des Herbizids ANITEN ^{R} , das aus einem Gemisch von 2-(4-Chlor-o-tolyloxy)propionsäure, 3,5-Dijod-4-hydroxybenzonitril und 3,5-Dibrom-4-hydroxybenzonitril im Gewichtsverhältnis von etwa 5:1:1 besteht, wird in die zentrale Kammer 1 eine wässerige Lösung dieses Substanzgemischs mit einer Konzentration von etwa 525 g/l eingebracht.

Die Ionisation wird in einfachster Weise mit Hilfe eines Geräts erreicht, das einem Röntgengerät für ursprünglich medizinische Zwecke entspricht, dem die zur Strahlenabschirmung vorgesehenen Aluminiumplatten entnommen worden waren.

Selbstverständlich müssen die erforderlichen Strahlenschutzmaßnahmen gemäß dem Stand der Technik und die ÖVE-Vorschreibungen bei Betreibung der Anlage eingehalten werden.

Die Anlage wird bevorzugt kontinuierlich gefahren, wobei die Rohlösung mit einer Geschwindigkeit von 17 l/h durch die Kammer 1 läuft.

Die Lösung in der Anolytkammer 7, die aus entmineralisiertem Wasser mit 1 % chemischer reiner NaOH besteht und zu Beginn des Versuchs absolut chlorfrei ist, weist bereits nach 2 Minuten Versuchsdauer einen Chlorgehalt von 24,5 mg/l, einen Jodgehalt von 0,15 mg/l und einen Bromgehalt von 0,25 mg/l auf.

Die Überprüfung der Halogengehalte dieser Lösung erfolgt bevorzugt auf spektrophotometrischem Weg.

Bei der genannten kontinuierlichen Verfahrensführung wird durch die Leitungen 16 und 17 eine 8 gew.-%ige bzw. 4 gew.-%ige Natronlauge zugeführt.

Die Anolyt- und Katholytlösung wird durch Zufuhr von etwa 8 gew.-%iger Natronlauge in einem Ausmaß von etwa NaOH:Halogen = 1:1 laufend ersetzt.

Wie in dieser Figur gezeigt, ist die Dialyseeinrichtung vorzugsweise eine Mehrkammereinrichtung. In gewissen Fällen kann jedoch auch eine einfache Dialyseeinrichtung mit nur einer Kammer durchaus genügen.

Bevorzugt weist die Dialyseeinrichtung mindestens eine bipolare Membran auf.

Die Dialyse wurde bei der in Fig. 1 gezeigten Vorrichtung mit einer Spannung von 30 bis 200 Volt vorgenommen. Es fließt dabei eine elektrische Energie von etwa 21 W pro kg zu behandelnder Flüssigkeit.

Bei der praktischen Durchführung des Verfahren erfolgen Ionisation und Dialyse vorzugsweise unter Druck.

Anstelle der Natronlaugezufuhr kann auch Zufuhr einer Salzlösung, wie etwa einer Natriumsalzlösung erfolgen.

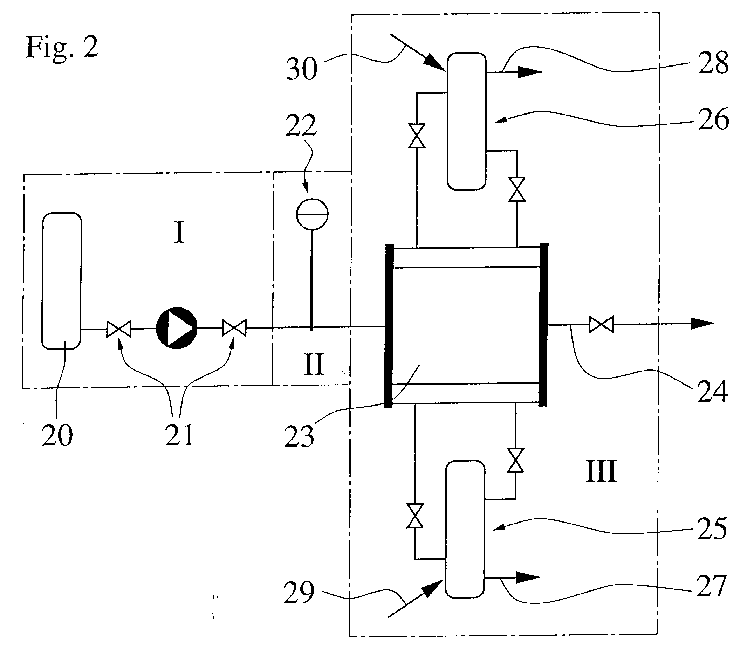

Figur 2 zeigt nun eine gesamte Anlage, in der eine Ionisations-und Dialysevorrichtung, in diesem Fall getrennt voneinander, angeordnet sind.

Im Anlagenteil I erfolgt die Zuführung des Rohstoffgemisches aus einem Tank 20 über eine Leitung 21, in der die erforderlichen Pumpen und Ventile vorgesehen sind.

Durch Einwirkung der Ionisationseinrichtung 22 im Ionisationsteil II wird die zu entsorgende Substanz aufgespalten und in der Dialyseeinrichtung aufgetrennt.

Der Dialyseteil III zeigt, daß aus der Dialysevorrichtung 23 über die Leitung 24 der Austrag der organischen Substanz im Diluat erfolgt, während über die Kreisläufe 25 und 26 der Austrag der anorganischen Reaktionsprodukte/Konzentrat erfolgt. Um diese bei 27 und 28 abführen zu können, müssen durch die Leitungen 29 und 30 jeweils Laugen- bzw. Salzlösung zugeführt werden.

Unvollständig umgesetzte Lösungen können in das Verfahren rezykliert werden.

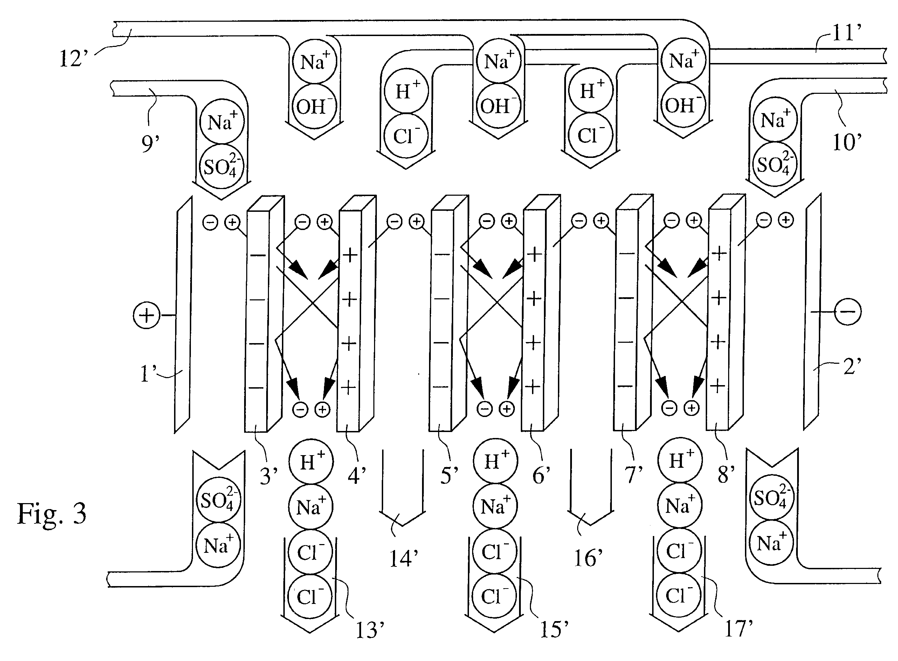

Figur 3 zeigt ein ausgefeilteres Mehrkammersystem in funktionsschematischer Darstellung. Es ist aus der Darstellung das Prinzip des Ionenflusses ersichtlich, der in der Anlage vonstatten geht. Mit der Rohlösung können rezyklierte Teile des Diluats, sofern die Bearbeitung noch nicht vollständig war, wieder in die Anlage zurückgeführt werden.

Zwischen Anode 1' und Kathode 2' sind die Membranen 3' bis 8' angeordnet, wobei die Membranen 3', 5' und 7' Kathodenmembranen und die Membranen 4', 6' und 8' Anodenmembranen sind. Anolyt 9' und Katholyt 10' sind in diesem Ausführungsbeispiel Natriumsulfatlösungen. Über die Leitung 11' wird als Aufnehmerlösung eine wässerige Salzlösung (z.B. NaCl, Na₂SO₄) oder Lauge (z.B. Na0H) zugeführt, die durch die entsprechenden Kammern zirkuliert, wobei durch die Leitungen 13', 15' und 17' Konzentrat abgezogen wird.

Bei 12' wird die Rohlösung des zu entsorgenden FCKW, Insektizids oder Herbizids zugeführt. Diluat wird durch die Leitungen 14', 16' abgezogen bzw. zu 12' zurückgeführt.

Weitere Details der Verfahrensführung liegen im Bereich des Könnens des durchschnittlichen Fachmanns auf dem Gebiet der Elektrodialyse und müssen nicht weiter erläutert werden.

## Patentansprüche

1. Verfahren zur Entsorgung von organischen Verbindungen, die zusätzlich zu den Elementen Kohlenstoff, Wasserstoff, Sauerstoff und Halogen gegebenenfalls Phosphor, Schwefel und/oder Metallelemente in atomarer Bindung enthalten, durch Ionisation derselben und Auftrennung der entstehenden Ionisationsprodukte durch Elektrodialyse, **dadurch gekennzeichnet**, daß als zu entsorgende Verbindungen aromatische Halogenverbindungen behandelt werden.

2. Verfahren nach Anspruch 1, **dadurch gekennzeichnet**, daß Verbindungen behandelt werden, bei denen Halogen an einen Phenylring gebunden ist.

3. Verfahren nach Anspruch 1 oder 2, **dadurch gekennzeichnet**, daß durch Chlor, Brom und/oder Jod substituierte Benzolderivate behandelt werden.

4. Verfahren nach einem der Ansprüche 1 bis 3, **dadurch gekennzeichnet**, daß Benzolverbindungen, die außer durch Halogen noch durch eine oder mehrere Hydroxyl-, Cyan-, Alkyl- bzw. gegebenenfalls veresterte Carboxyl- oder Carboxyalkylengruppen substituiert sind, behandelt werden.

5. Verfahren nach einem der Ansprüche 1 bis 4, **dadurch gekennzeichnet**, daß Dibrom- bzw. Dijodhydroxybenzonitril behandelt wird.

6. Verfahren nach einem der Ansprüche 1 bis 4, **dadurch gekennzeichnet**, daß Chlortolyloxypropionsäure behandelt wird.

7. Verfahren nach einem der Ansprüche 1 bis 6, **dadurch gekennzeichnet**, daß eine Mischung aus Dibrom- bzw. Dijodhydroxybenzonitril und Chlortolyloxypropionsäure behandelt wird.

8. Verfahren nach einem der Ansprüche 1 bis 3, **dadurch gekennzeichnet**, daß halogenierte Polyphenyle, vorzugsweise polyhalogeniertes Biphenyl (PCB) behandelt wird.

9. Verfahren nach einem der Ansprüche 1 bis 8, **dadurch gekennzeichnet**, daß die Ionisation durch Röntgenstrahlen, gegebenenfalls in Kombination mit Beta- und/oder Gammastrahlen, erfolgt.

10. Verfahren nach einem der Ansprüche 1 bis 9, **dadurch gekennzeichnet**, daß die zu entsorgende Substanz in flüssigem Zustand ionisiert wird.

11. Verfahren nach einem der Ansprüche 1 bis 10, **dadurch gekennzeichnet,** daß die zu entsorgende Substanz in Form einer Lösung, vorzugsweise in wässeriger Lösung, ionisiert wird.

12. Verfahren nach einem der Ansprüche 1 bis 11, **dadurch gekennzeichnet**, daß durch die Ionisation eine Mindestleitfähigkeit von 500 µS (MikroSiemens) hervorgerufen wird.

13. Verfahren nach einem der Ansprüche 1 bis 12, **dadurch gekennzeichnet**, daß die Elektrodialyse unter einer Spannung von 30 bis 200 Volt erfolgt.

14. Verfahren nach einem der Ansprüche 1 bis 13, **dadurch gekennzeichnet**, daß Ionisation und Dialyse unter Druck erfolgen.

15. Verfahren nach einem der Ansprüche 1 bis 14, **dadurch gekennzeichnet,** daß der Dialyseflüssigkeit im Anoden- und Kathodenbereich zur Erhöhung der Leitfähigkeit ein Alkalimetallhydroxid, vorzugsweise Natriumhydroxid, oder ein Alkalimetallsalz zugesetzt wird.

16. Vorrichtung zur Durchführung des Verfahrens nach einem der Ansprüche 1 bis 15, **dadurch gekennzeichnet**, daß sie eine Ionisationseinrichtung und eine Dialyseeinrichtung räumlich ineinander integriert enthält.

17. Vorrichtung nach Anspruch 16, **dadurch gekennzeichnet**, daß sie als Ionisationseinrichtung ein übliches Röntgengerät, dem die zur Abschirmung der unerwünschten Strahlung eingesetzten Aluminiumplatten entnommen wurden, enthält.

18. Vorrichtung nach Anspruch 16 oder 17, **dadurch gekennzeichnet**, daß die Dialyseeinrichtung eine Mehrkammereinrichtung ist.

19. Vorrichtung nach einem der Ansprüche 16 bis 18**, dadurch gekennzeichnet**, daß die Dialyseeinrichtung mindestens eine bipolare Membran enhält.

20. Vorrichtung nach einem der Ansprüche 16 bis 19, **dadurch gekennzeichnet**, daß sie eine zentrale Kammer (1), in welcher die Ionisation stattfindet, daran anschließend in Richtung Anode (3) und Kathode (4) jeweils eine durch eine Membran (5,6) von der Kammer (1) abgetrennte Anolytkammer (7) und eine Katholytkammer (8), an diese anschließend jeweils eine durch eine Membran (12,13) abgetrennte Anodenkammer (14) und eine Kathodenkammer (15), sowie eine Materialleitung (2) für die Rohlösung, Zufuhrleitungen (16, 17, 18, 19) für die Laugen- oder Salzlösung in die Anolyt- bzw. Katholytkammer (7,8) bzw. in die Anoden- bzw. Kathodenkammer (14,15) sowie eine Austragsleitung (11) für den organischen Austrag (Diluat) und Abzugsleitungen (9,10) für den anorganischen Austrag (Konzentrat) aufweist.

## Claims

1. A method for the disposal of organic compounds which in addition to the elements of carbon, hydrogen, oxygen and halogen optionally contain phosphorus, sulfur and/or metal elements in atomic bonding, by ionization of the same and cleavage of the produced ionization products by electrodialysis, characterized in that aromatic halogen compounds are treated as compounds to the disposed.

2. A method as claimed in claim 1, characterized in that compounds are treated in which halogen is bonded to a phenyl ring.

3. A method as claimed in claim 1 or 2, characterized in that benzene derivatives substituted by chlorine, bromine and/or iodine are treated.

4. A method as claimed in one of the claims 1 to 3, characterized in that benzene compounds are treated which except by halogen are substituted by one or several hydroxyl, cyanide, alkyl and optionally esterified carboxyl or carboxyalkylene groups.

5. A method as claimed in one of the claims 1 to 4, characterized in that dibromo hydroxybenzonitrile or diiodine hydroxybenzonitrile is treated.

6. A method as claimed in one of the claims 1 to 4, characterized in that chlorotolylic oxopropanoic acid is treated.

7. A method as claimed in one of the claims 1 to 6, characterized in that a mixture of dibromo hydroxybenzonitrile or diiodine hydroxybenzonitrile and chlorotolylic oxopropanoic acid is treated.

8. A method as claimed in one of the claims 1 to 3, characterized in that halogenated polyphenyls, preferably polyhalogenated biphenyl (PCB), are treated.

9. A method as claimed in one of the claims 1 to 8, characterized in that the ionization is performed by X-radiation, optionally in combination with beta and/or gamma rays.

10. A method as claimed in one of the claims 1 to 9, characterized in that the substance to be disposed of is ionized in the liquid state.

11. A method as claimed in one of the claims 1 to 10, characterized in that the substance to be disposed of is ionized in form of a solution, preferably in an aqueous solution.

12. A method as claimed in one of the claims 1 to 11, characterized in that a minimum conductivity of 500 µS (microsiemens) is produced by the ionization.

13. A method as claimed in one of the claims 1 to 12, characterized in that the electrodialysis is performed at a voltage of 30 to 200 volts.

14. A method as claimed in one of the claims 1 to 13, characterized in that the ionization and the dialysis are performed under pressure.

15. A method as claimed in one of the claims 1 to 14, characterized in that an alkali metal hydroxide, preferably sodium hydroxide, or an alkali metal salt is added to the dialysis liquid in the zone of the anode and cathode for the purpose of increasing the conductivity.

16. An apparatus to perform the method as claimed in one of the claims 1 to 15, characterized in that it contains an ionization device and a dialysis device which are spatially integrated into each other.

17. An apparatus as claimed in claim 16, characterized in that it contains a conventional X-ray device as an ionization device from which the aluminium plates, which are used to screen the undesirable radiation, are removed.

18. An apparatus as claimed in claim 16 or 17, characterized in that the dialysis device is a multi-chamber device.

19. An apparatus as claimed in one of the claims 16 to 18, characterized in that the dialysis device comprises at least one bipolar membrane.

20. An apparatus as claimed in one of the claims 16 to 19, characterized in that it is provided with a central chamber (1) in which the ionization occurs, adjacent thereto in the direction of the anode (3) and cathode (4) an anolyte chamber and a catholyte chamber (8) each separated from the chamber (1) by a membrane (5, 6), and adjacent thereto an anode chamber (14) and cathode chamber (15) each separated by a membrane (12, 13) as well as a material line (2) for the raw solution, feed lines (16, 17, 18, 19) for the alkaline or saline solution to the anolyte or catholyte chamber (7, 8) or to the anode or cathode chamber (14, 15) respectively as well as a discharge line (11) for the organic discharge (diluate) and drain lines (9, 10) for the organic discharge (concentrate).

## Revendications

1. Procédé d'élimination de composés organiques contenant le cas échéant, en plus des éléments carbone, hydrogène, oxygène et halogène, du phosphore, du soufre et/ou des éléments métalliques en liaison atomique, par ionisation de ceux-ci et séparation des produits d'ionisation résultants par électrodialyse, caractérisé en ce que, comme composés à éliminer, on traite des composés aromatiques halogénés.

2. Procédé selon la revendication 1, caractérisé en ce que l'on traite des composés dans lesquels l'halogène est lié à un noyau phényle.

3. Procédé selon la revendication 1 ou la revendication 2, caractérisé en ce que l'on traite des dérivés de benzène substitués par le chlore, le brome et/ou l'iode.

4. Procédé selon l'une des revendications 1 à 3, caractérisé en ce que l'on traite des dérivés de benzène qui, sont substitués par, outre l'halogène, également un ou plusieurs groupes hydroxyle, cyano, alkyle, ou bien des groupes carboxyle ou carboxyalkyle le cas échéant estérifiés.

5. Procédé selon l'une des revendications 1 à 4, caractérisé en ce que l'on traite du dibromo- ou diiodo- hydroxybenzonitrile.

6. Procédé selon l'une des revendications 1 à 4, caractérisé en ce que l'on traite de l'acide chlorotolyloxypropionique.

7. Procédé selon l'une des revendications 1 à 6, caractérisé en ce que l'on traite un mélange de dibromo- ou diiodohydroxybenzonitrile et d'acide chlorotolyloxypropionique.

8. Procédé selon l'une des revendications 1 à 3, caractérisé en ce que l'on traite des polyphényles halogénés, de préférence du biphényle polyhalogéné (PCB).

9. Procédé selon l'une des revendications 1 à 8, caractérisé en ce que l'ionisation se fait par exposition à des rayons X, le cas échéant associée à une exposition à des rayons bêta et/ou gamma.

10. Procédé selon l'une des revendications 1 à 9, caractérisé en ce que la substance à éliminer est ionisée à l'état liquide.

11. Procédé selon l'une des revendications 1 à 10, caractérisé en ce que la substance à éliminer est ionisée sous la forme d'une solution, de préférence dans une solution aqueuse.

12. Procédé selon l'une des revendications 1 à 11, caractérisé en ce qu'une conductivité minimum de 500 µS (microsiemens) est provoquée par l'ionisation.

13. Procédé selon l'une des revendications 1 à 12, caractérisé en ce que l'électrodialyse se fait sous une tension de 30 à 200 volts.

14. Procédé selon l'une des revendications 1 à 13, caractérisé en ce que l'ionisation et la dialyse se font sous pression.

15. Procédé selon l'une des revendications 1 à 14, caractérisé en ce que l'on ajoute au liquide de dialyse dans la zone de l'anode et de la cathode, pour augmenter la conductivité, un hydroxyde de métal alcalin, de préférence de l'hydroxyde de sodium, ou un sel de métal alcalin.

16. Dispositif pour mettre en oeuvre le procédé selon l'une des revendications 1 à 15, caractérisé en ce qu'il contient un équipement d'ionisation et un équipement de dialyse intégrés l'un dans l'autre dans l'espace.

17. Dispositif selon la revendication 16, caractérisé en ce qu'il contient comme équipement d'ionisation un appareil à rayons X usuel dont les plaques d'aluminium servant de blindage contre l'irradiation indésirable ont été enlevées.

18. Dispositif selon la revendication 16 ou la revendication 17, caractérisé en ce que l'équipement de dialyse est un équipement à plusieurs chambres.

19. Dispositif selon l'une des revendications 16 à 18, caractérisé en ce que l'équipement de dialyse contient au moins une membrane bipolaire.

20. Dispositif selon l'une des revendications 16 à 19, caractérisé en ce qu'il présente une chambre centrale (1) dans laquelle a lieu l'ionisation, raccordées à elle en direction de l'anode (3) et de la cathode (4), une chambre d'anolyte (7) et une chambre de catholyte (8) séparées chacune de la chambre (1) par une membrane (5, 6), raccordées à celles-ci une chambre anodique (14) et une chambre cathodique (15) respectivement séparées par une membrane (12, 13), ainsi qu'une conduite de matériau (2) pour la solution brute, des conduites d'alimentation (16, 17, 18, 19) pour la solution de lessive caustique ou de sel dans les chambres d'anolyte ou de catholyte (7, 8) ou dans les chambres anodique ou cathodique (14, 15), ainsi qu'une conduite d'extraction (11) pour l'extrait organique (diluat) et des conduites d'évacuation (9, 10) pour l'extrait inorganique (concentré).
